# EUROPEAN PATENT APPLICATION

(11) **EP 4 760 189 A1**
(43) Date of publication of application: **17.06.2026**
(21) Application number: 25158925.5
(22) Date of filing: 19.02.2025
(51) Int. Cl.: F28D 7/00, F28D 20/02, F28D 20/00, F28F 1/12, F28F 1/42

(54) **DUCTING DEVICE**

(30) Priority: 11.12.2024 EP 24219178
(71) Applicant: MoldTecs-01-2022 GmbH, 38667 Bad Harzburg (DE)
(72) Inventor: Le Gal, Grégoire, 53000 Laval (FR); Lardeux, Sébastien, 53410 Saint Quen des Toits (FR); Ratajczack, Christelle, 53061 Laval Cedex 9 (FR)
(74) Representative: STT Sozietät Thews & Thews

(57) **Abstract**

Ducting device (6) for storing thermal energy with a housing (7) having a PCM-volume (7a) for storing phase change material (PCM). An integration in a duct system can be combined with an adjustment to different amounts of thermal energy to be transferred. The housing (7) has a lower opening (7.1) with a peripherally extending flange (7.2) encircling the lower opening (7.1) and wherein the lower opening (7.1) and/or the flange (7.2) define a geometrical area (GA) with a cylindrical shape or a plane shape parallel to said axis_C of the housing (7) being coaxial and/or parallel adjustable to a middle axis_M of a duct.

## Description

### TECHNICAL FIELD

The invention relates to a ducting device for storing thermal energy with a housing having a PCM-volume for storing phase change material (PCM).

### BACKGROUND

A generic ducting device for storing thermal energy is known from CN 101545 571 B. A phase change energy storage material is placed between the outer layer of the infusion pipe and the pores of the infusion pipe, so as to improve the thermal insulation performance of the infusion pipe or the oil pipe.

It is an object of the present invention to design and arrange a ducting device for storing thermal energy in such a way that an integration in a duct system can be combined with an adjustment to different amounts of thermal energy to be transferred.

According to an aspect of the invention, the problem is solved in that said housing has a lower opening with a peripherally extending flange encircling said lower opening, wherein said lower opening and/or said flange defines a geometrical area with a cylindrical shape or a plane shape parallel to an axis_C of the housing being coaxial and/or parallel adjustable to a middle axis_M of a duct. The duct itself is not part of the basic invention. Said cylindrical shape has a curved geometry in relation to an axis_C which allows the housing to be connected to a duct or a cylindrical pipe. Adaptable means that the housing and in particular the flange can be brought into a suitable contact with an external surface of a duct in order to connect the housing to the duct. The suitable contact enables the housing to be connected to the duct using welding, soldering or gluing. A duct can have various shapes, e.g. that of a pipe or a conical duct. Any conductive element in the sense of this invention has a thermal conductivity larger than 10 [W/mK] (Watt per metre and Kelvin).

According to a relevant aspect of the invention said ducting device has a conductive element, wherein said conductive element has a base plate with a cylindrical or a plane shape and said base plate is tightly mounted at said flange of the housing for closing the lower opening. Thermal energy of the PCM in the PCM volume can be exchanged with an external medium through the conductive element. In the preferred case, the external medium is a duct to which the ducting device is connected.

It is advantageous in terms of transfer of thermal energy thatsaid base plate has a structure of upper ribs and lower ribs opposite on both sides of said base plate, wherein said ribs raise in a direction perpendicular or radial in relation to said base plate. The structure of the ribs serves to exchange as much thermal energy as possible per surface area over a large surface area of the ribs.

For this purpose, it is advantageously provided that said upper ribs are positioned in said PCM-volume and said lower ribs can be positioned inside a duct. The upper ribs are used to exchange thermal energy in the PCM volume. The lower ribs are used for the exchange of thermal energy with the medium in the duct. Additionally, the lower ribs should have little flow resistance for the medium in the duct.

A further aspect of the invention is that said housing has an upper opening with a housing edge encircling said upper opening, wherein said ducting device has a second conductive element with a basic plate and said upper opening is tightly closed with said basic plate. The second conductive element allows thermal energy to be exchanged more efficiently and to a greater amount with the PCM and thus indirectly with the medium in the duct. The upper opening is in opposite of the lower opening. This opposite position is in relation to a direction perpendicular to the axis_C.

It is a thermal advantage that said basic plate has a structure of bottom ribs on the bottom side of said basic plate, wherein said bottom ribs raise preferably perpendicular in relation to the basic plate and wherein said bottom ribs are inserted into said PCM-volume. This increases the amount of thermal energy that can be exchanged between the PCM and the second conductive element.

A basic idea is that said upper ribs of said conductive element and said bottom ribs of said second conductive element are inserted into one another. This results in an exchange of thermal energy between the conductive element and the second conductive element with high efficiency because the PCM is in contact with each of the two conductive elements over a large surface area.

It is advantageous in terms of a maximum transfer of thermal energy that on the top side of said second conductive element a cooling structure and / or cooling fins and / or a fluid box is provided to transfer heat from said second conductive element to the atmosphere or to any medium. As a result, the housing is not only used as a thermal energy store, but also serves as a heat exchanger outside the housing.

It is advantageous in terms of design freedom thata said upper ribs, said lower ribs, said bottom ribs and / or said cooling fins are designed as a conductive matrix that forms cavities or cells or fins or walls. Depending on the application, the fins have a very large surface area for exchanging thermal energy with PCM. In the case where the fins are arranged in a medium that flows, the fins are optimised for low flow resistance.

In relation to an extensive transfer of thermal energy on top of the housing a fluid box with a fluid volume is provided, wherein said fluid box has a bottom opening with an opening edge encircling said bottom opening and wherein said fluid box is tightly connected with said opening edge to said basic plate and wherein said bottom ribs are inserted into said fluid volume. The fluid box makes it possible to significantly increase the amount of heat to be exchanged with the PCM.

According to a relevant aspect in terms of heat exchange said fluid box has an inlet hose and an outlet hose for a fluid. The two hoses can be used to connect a circuit of medium to the fluid box, which allows a further increase in the amount of heat transfer.

It is advantageous in terms of efficiency that said the housing and/or the fluid box is made of plastic or thermoplastic or a combination with ceramic, wherein said conductive element and said second conductive element is made of metal or conductive thermoplastic having a thermal conductivity greater than 10 W/(mK). Additionally, the housing is elastic. PCM can have volumetric expansion when melting and volumetric retractation when solidifying. Those volumetric variations are absorbed due to the elasticity of the housing.

In relation to an easy closable connection, said conductive element and/or said second conductive element each are tightly mounted to the housing and/or to the fluid box with at least one of the following methods: glueing, soldering, welding, melting and/or with a form fitting locking

In relation to an efficient system said ducting device is combined wit a duct. Said duct has a duct wall and a middle axis_M parallel to the duct wall and wherein the duct wall has a cut-out to insert said ribs into the duct volume of the duct, wherein said duct volume is limited by an inner duct surface of said duct wall. The lower ribs of the conductive element are positioned in the duct volume.

Ii is advantageous, that said ducting device is
a) part of a cooling system or a Thermal Management System or
b) part of a Thermal Management Module device to manage the refrigerant or coolant flow in a thermal management system or
c) a Thermal Management Module device for transportation industry or for battery electric vehicle or for hybrid vehicle or for heavy duty industry.

### DESCRIPTION OF THE DRAWINGS

Various aspects of the invention, including its features and advantages, will be readily understood from the example embodiments discussed in the following detailed description and the accompanying drawings, in which:
- Figure 1: illustrates a sectional view of a ducting device with PCM-storage;
- Figure 1a: illustrates an exploded view of a ducting device according to figure 1;
- Figure 2: illustrates a sectional view of a ducting device with a PCM-storage and with a second conductive element;
- Figure 2a: illustrates an exploded view of a ducting device according to figure 2;
- Figure 3: illustrates a sectional view of a ducting device with a PCM-storage, a second conductive element and a fluid box;
- Figure 3a: illustrates a detail of the figures 2 and 3;
- Figure 3b: illustrates an exploded view of a ducting device according to figure 3.

The figures illustrate a ducting device 6 for storing thermal energy with a housing 7 with an PCM-volume 7a for storing phase change material. The housing 7 has a curved geometry in relation to an axis_C which allows the housing 7 to be connected with a duct 8. For this connection the housing 7 has a lower opening 7.1 with a peripherally extending flange 7.2 encircling the lower opening 7.1. The lower opening 7.1 and the flange 7.2 define a geometrical area GA in the sense of a theoretical geometrical area GA with a cylindrical or a plane shape parallel to the axis_C. The housing 7 is positioned with the axis_C being coaxial and/or parallel to a middle axis_M of a duct 8.

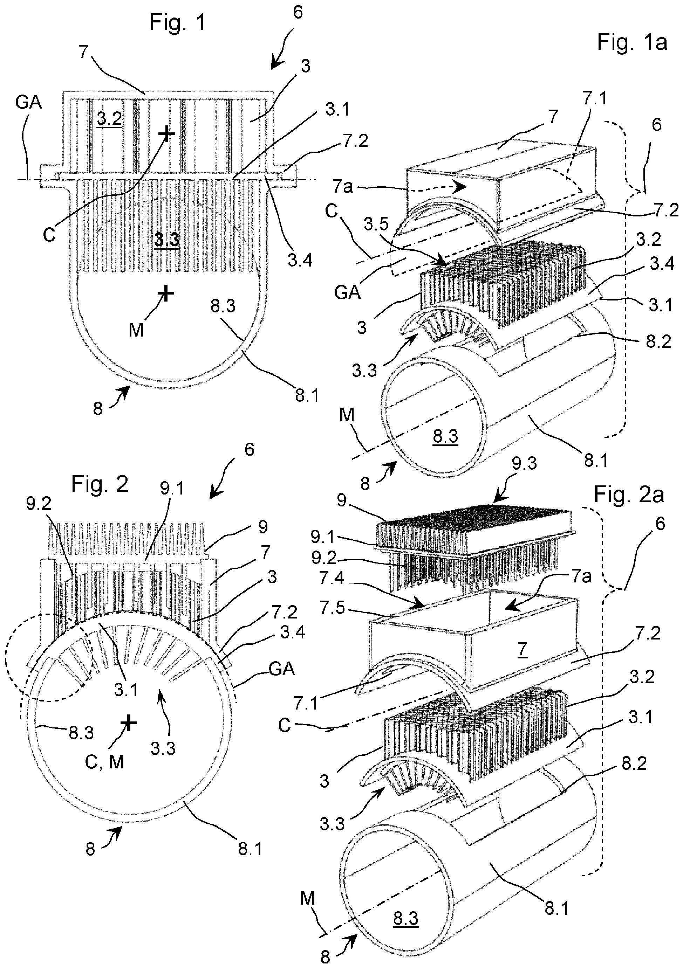

In a preferred embodiment shown in fig. 2 to 3b the geometrical area GA and the flange 7.2 have a cylindrical shape. The axis_C is coaxial to a middle axis_M of a duct 8. It follows from this that the flange 7.2 is coplanar with the outer surface of the duct 8. A conductive element 3 with a base plate 3.1 is tightly mounted at the flange 7.2 for closing the lower opening 7.1 and the cut-out 8.2 in the duct wall 8.1 of the duct 8. The base plate 3.1 has a structure of upper ribs 3.2 and lower ribs 3.3 opposite on both sides of the base plate 3.1. The upper ribs 3.2 are positioned in the PCM-volume 7a and the lower ribs 3.3 are positioned in the duct 8.

For cooling the PCM in the PCM-volume 7a a second conductive element 9 is provided. The housing 7 has an upper opening 7.4 with a housing edge 7.5 encircling the upper opening 7.4. The second conductive element 9 has a basic plate 9.1 to tightly close the upper opening 7.4. The basic plate 9.1 has a structure of bottom ribs 9.2 on the bottom side of the basic plate 3.1 that are inserted into the PCM-volume 7a. Opposite of the bottom ribs 9.2 the second conductive element 9 has a cooling structure in form of cooling fins 9.3 that are provided to transfer heat from the second conductive element 9 to the atmosphere.

The basic idea is an easy installation of the housing 7 on a duct 8 for fluids, especially for liquids or cooling fluids. A duct 8 could also be a pipe or a hose. The housing 7 can also be installed at a later date when the duct 8 is already in operation. In principle, heat storage in the PCM storage 7a is possible with the conductive element 3 alone. By using a second conductive element 9, the heat can be discharged from the PCM storage 7a. By using a fluid box 10, the heat can be discharged from the PCM storage 7a in a controlled process and, if required, also transferred to the PCM storage 7a in a controlled process.

### DETAILLED DESCRIPTION OF THE DRAWINGS

Fig. 1 to 3b each show a housing 7 with a central axis_C that encloses a PCM volume 7a. The essential idea of the invention is said housing with said PCM volume 7a and a conductive element 3 being attachable to a duct 8 or any other casing for a medium to transfer thermal energy between that medium and the PCM. The housing 7 encloses or forms a PCM volume 7a for the absorption and release of thermal energy. In the embodiments described below, the housing 7 is cubic in shape and has at least one lower opening 7.1. Regardless of the cubic shape, this lower opening 7.1 is used to insert a conductive element 3 in the PCM volume 7a. Said housing has a flange 7.2, which surrounds the edge of the lower opening 7.1. The conductive element 3 has a base plate 3.1. Upper ribs 3.2 are arranged on the base plate 3.1. The upper ribs 3.2 are arranged in the PCM volume 7a and form a large surface for transferring thermal energy. The upper ribs 3.2 have the shape of cells 3.5, e.g. the shape of honeycomb cells. Additionally, the base plate 3.1 closes the lower opening 7.1. The flange 7.2 and the base plate 3.1 are arranged parallel and in contact to each other. This contact serves to connect the two components with each other by soldering or gluing. In addition to the upper ribs 3.2, lower ribs 3.3 are provided on the base plate 3.1. Like the upper ribs 3.2, the lower ribs 3.3 serve to transfer thermal energy to the conductive element 3. In every embodiment described the flange 7.2 and the base plate 3.1 are arranged on top of each other.

The geometrical area GA is a theoretical geometrical area that defines the shape or design of the connection surface from the base plate 3.1 and/or the housing 7 with a duct 8. The geometrical area GA can have a flat or cylindrical or other shapes, depending on how the connection surface between the housing 7 and a duct 8 is designed. By attaching or mounting the housing 7 with the conductive element 3 to the duct 8, the lower ribs 3.3 extend into the duct 8. The duct 8 has an inner volume that is limited in the radial direction by the inner duct surface 8.3. Depending on the embodiment, the lower ribs 3.3 are arranged completely or at least almost completely in the inner volume of the duct 8. The lower ribs 3.3 are aligned essentially parallel to a centre axis_M so that the medium flowing in the duct 8 can flow through the lower ribs 3.3 with the lowest possible flow resistance. The medium in duct 8 exchanges thermal energy with the PCM in the PCM volume 7a via the conductive element 3.

Fig. 1 shows a sectional view of a ducting device 6. The housing 7 is closed except for the lower opening 7.1. The lower opening 7.1 has the size of the lower side wall of the housing 7. The flange 7.2 protrudes over the base plate 3.1 in a direction parallel to the axis_C. The flange 7.2 and the base plate 3.1 are both flush with the geometrical area GA in the radial direction. The geometrical area GA forms a flat mounting surface for attachment to a duct 8. The lower ribs 3.3 protrude into the duct 8 almost up to the middle axis_M.

In the embodiment shown in fig. 1a, the housing 7 is also open towards one side wall, which forms the lower opening 7.1. The lower opening 7.1 is surrounded by the flange 7.2. The housing 7 forms the PCM volume 7a in accordance with all other embodiments. In contrast to the embodiment shown in fig. 1, the geometrical area GA is cylindrical in shape. The flange 7.2 and the base plate 3.1 are correspondingly cylindrical relative to the axis_C. The lower ribs 3.3 extend in a radial direction and parallel to the axis_C. This cylindrical shape corresponds to the outer geometry of the duct 8. The duct 8 has the shape of a pipe and has a cut-out 8.2 into which the lower ribs 3.3 are inserted. The base plate 3.1 has a mounting flange 3.4 running around the base plate 3.1, which is used to attach the base plate 3.1 to the duct 8. The mounting flange 3.4 is reduced in thickness compared to the other part of the base plate 3.1. On the surface of the base plate 3.1 that is surrounded by the mounting flange 3.4, the base plate 3.1 is correspondingly thicker. The lower ribs 3.3 are provided on this thicker section. As can be seen in fig. 1a, the thicker part of the base plate 3.1 is flush with the cut-out 8.2 in the circumferential direction and flush with the inner duct surface 8.3 in the radial direction. As a result, the base plate 3.1 does not form any flow resistance in the duct 8 and the small width of the gap in the circumferential direction allows the base plate 3.1 to be connected to the duct 8 by soldering.

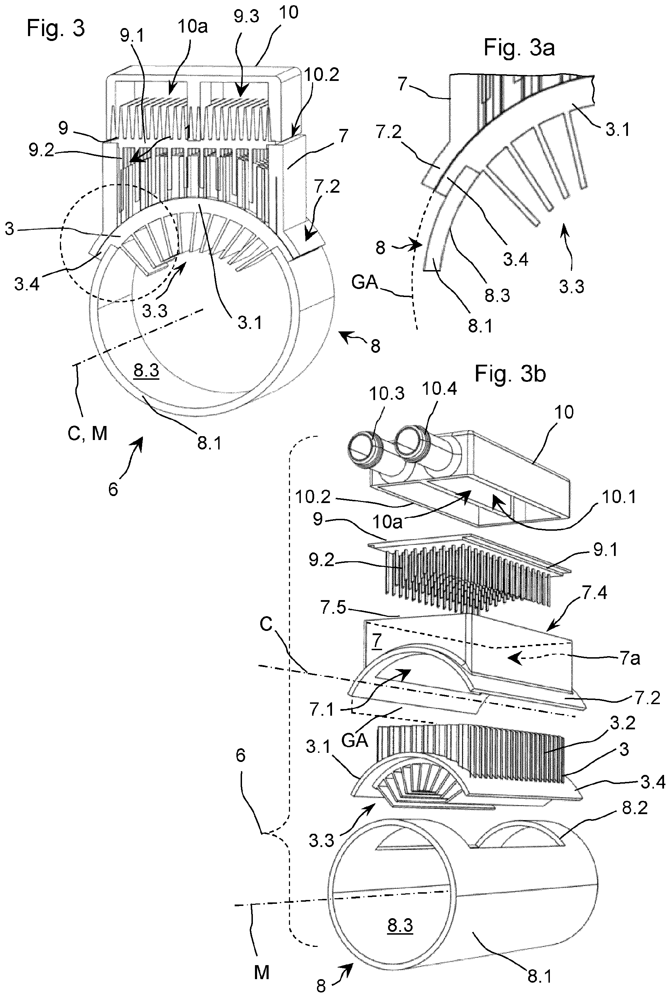

This geometry of the base plate 3.1 and the cut-out 8.2 is also shown in fig. 2 and 3 and enlarged in fig. 3a. As in all cylindrical embodiments, the centre axis_M is arranged coaxially to the axis_C. In contrast to the embodiment according to fig. 1a, the housing 7 according to the embodiments shown in fig. 2 to 3b has a further opening, namely an upper opening 7.4. The upper opening 7.4 is arranged opposite the lower opening 7.1. The upper opening 7.4 is provided in order to integrate a second conductive element 9 into the ducting device 6. The second conductive element 9 has a basic plate 9.1 and bottom ribs 9.2 and cooling fins 9.3 arranged opposite to each other on each side of the basic plate 9.1. The upper opening 7.4 is closed by the basic plate 9.1. The bottom ribs 9.2 protrude into the PCM volume 7a. The thermal energy in the PCM volume 7a is exchanged with the basic plate 9.1 and with the cooling fins 9.3 via the bottom ribs 9.2. Like the cooling fins 9.3, the bottom ribs 9.2 extend essentially at right angles to the basic plate 9.1. In this embodiment, the basic plate 9.1 is flat. In the embodiments shown in fig. 2 and 2a, the cooling fins 9.3 exchange thermal energy with the atmosphere.

Another embodiment for conducting thermal energy is shown in fig. 3 and 3b. A fluid box 10 is provided, which is combined with the second conductive element 9. A fluid in the fluid box 10 can be exchanged via an inlet hose 10.3 and an outlet hose 10.4 with a cooling circuit not shown in detail. This allows the medium in the fluid volume 10a of the fluid box 10 to be integrated into a circuit for exchanging thermal energy. The fluid box 10 has a bottom opening 10.1 which is limited by an opening edge 10.2. The fluid box 10 is placed on the basic plate 9.1 with the opening edge 10.2. In an embodiment not shown, the fluid box 10 can also be placed directly on the housing edge 7.5 of the housing 7.

In the embodiment shown in fig. 3, the cooling fins 9.3 are arranged in the fluid volume 10a. In the embodiment shown in fig. 3b, no cooling fins are provided on the basic plate 9.1. The exchange of thermal energy takes place in the fluid box 10 via the basic plate 9.1.

The axial direction, the radial direction, the circumferential direction (circumferentially) and the coaxial positions as well as parallel positions have a meaning in relation to the axis_C and/or to the middle axis_M. This does not apply if a different relative reference is specified.

### List of references

- 3: conductive element
- 3.1: base plate
- 3.2: upper ribs
- 3.3: lower ribs
- 3.4: mounting flange
- 3.5: cells
- 6: ducting device
- 7: housing
- 7a: PCM-volume
- 7.1: lower opening
- 7.2: flange
- 7.4: upper opening
- 7.5: housing edge
- 8: duct
- 8.1: duct wall
- 8.2: cut-out
- 8.3: inner duct surface
- 9: second conductive element
- 9.1: basic plate
- 9.2: bottom ribs
- 9.3: cooling fins
- 10: fluid box
- 10a: fluid volume
- 10.1: bottom opening
- 10.2: opening edge
- 10.3: inlet hose
- 10.4: outlet hose
- C: axis_C
- M: middle axis_M
- GA: geometrical area

## Claims

1. Ducting device (6) for storing thermal energy with a housing (7) having a PCM-volume (7a) for storing phase change material (PCM), **characterized in that**
said housing (7) has a lower opening (7.1) with a peripherally extending flange (7.2) encircling the lower opening (7.1), wherein the lower opening (7.1) and/or the flange (7.2) define a geometrical area (GA) with a cylindrical shape or a plane shape parallel to an axis_C of the housing (7) being coaxial and/or parallel adjustable to a middle axis_M of a duct.

2. Ducting device (6) according to claim 1,
**characterized in that** said ducting device (6) has a conductive element (3), wherein said conductive element (3) has a base plate (3.1) with a cylindrical or a plane shape and said base plate (3.1) is tightly mounted at said flange (7.2) of the housing (7) for closing the lower opening (7.1).

3. Ducting device (6) according to claim 2,
**characterized in that** said base plate (3.1) has a structure of upper ribs (3.2) and lower ribs (3.3) opposite on both sides of said base plate (3.1), wherein said ribs (3.2, 3.3) raise in a direction perpendicular or radial in relation to said base plate (3.1).

4. Ducting device (6) according to claim 3,
**characterized in that** said upper ribs (3.2) are positioned in said PCM-volume (7a) and said lower ribs (3.3) can be positioned inside a duct (8).

5. Ducting device (6) according to any one of the preceding claims, **characterized in that** said housing (7) has an upper opening (7.4) with a housing edge (7.5) encircling said upper opening (7.4), wherein said ducting device (6) has a second conductive element (9) with a basic plate (9.1) and said upper opening (7.4) is tightly closed with said basic plate (9.1).

6. Ducting device (6) according to claim 5,
**characterized in that** said basic plate (9.1) has a structure of bottom ribs (9.2) on the bottom side of said basic plate (9.1), wherein said bottom ribs (9.2) raise preferred perpendicular in relation to the basic plate (9.1) and wherein said bottom ribs (9.2) are inserted into said PCM-volume (7a).

7. Ducting device (6) according to any one of the preceding claims 5 or 6, **characterized in that**, said upper ribs (3.2) of said conductive element (3) and said bottom ribs (9.2) of said second conductive element (9) are inserted into one another.

8. Ducting device (6) according to any one of the preceding claims 5 to 7, **characterized in that** on the top side of said second conductive element (9) a cooling structure and / or cooling fins (9.3) and / or a fluid box (10) is provided to transfer heat from said second conductive element (9) to the atmosphere or to any medium.

9. Ducting device (6) according to any one of the preceding claims 3 to 8, **characterized in that** said upper ribs (3.2), said lower ribs (3.3), said bottom ribs (9.2) and / or said cooling fins (9.3) are designed as a conductive matrix that forms cavities or cells or fins or walls.

10. Ducting device (6) according to any one of the preceding claims 5 to 9, **characterized in that** on top of the housing (7) a fluid box (10) with a fluid volume (10b) is provided, wherein said fluid box (10) has a bottom opening (10.1) with an opening edge (10.2) encircling said bottom opening (10.1) and wherein said fluid box (10) is tightly connected with said opening edge (10.2) to said basic plate (9.1) and wherein said bottom ribs (9.2) are inserted into said fluid volume (10b).

11. Ducting device (6) according to claim 10,
**characterized in that** said fluid box (10) has an inlet hose (10.3) and an outlet hose (10.4) for a fluid.

12. Ducting device (6) according to any one of the preceding claims, **characterized in that** the housing (7) and/or the fluid box (10) is made of plastic or thermoplastic or a combination with ceramic, wherein said conductive element (3) and said second conductive element (9) is made of metal or conductive thermoplastic having a thermal conductivity larger than 10 W/(mK).

13. Ducting device (6) according to any one of the preceding claims, **characterized in that** the conductive element (3) and/or the second conductive element (9) each are tightly mounted to the housing (7) and/or to the fluid box (10) with at least one of the following methods: glueing, soldering, welding, melting and/or with a form fitting locking.

14. Ducting device (6) according to any one of the preceding claims in combination with a duct (8),
**characterized in that** said duct (8) has a duct wall (8.1) and a middle axis_M parallel to the duct wall (8.1) and wherein the duct wall (8.1) has a cut-out (8.2) to insert said ribs (3.2, 3.3) into the duct volume of the duct (8), wherein said duct volume is limited by an inner duct surface (8.3) of said duct wall (8.1).

15. Ducting device (6) according to any one of the preceding claims, **characterized in that** said ducting device (6) is
a) part of a cooling system or a Thermal Management System or
b) part of a Thermal Management Module device to manage the refrigerant or coolant flow in a thermal management system or
c) a Thermal Management Module device for transportation industry or for battery electrical vehicle or for hybrid vehicle or for heavy duty industry.
